# EUROPÄISCHE PATENTANMELDUNG

(11) **EP 1 790 625 A1**
(43) Veröffentlichungstag der Anmeldung: **30.05.2007**
(21) Anmeldenummer: 05111175.5
(22) Anmeldetag: 23.11.2005
(51) Int. Cl.: C04B 40/00, C04B 28/02

(54) **Zusammensetzung und deren Verwendung zur Verminderung von Korrosion**

(71) Anmelder: Sika Technology AG, 6340 Baar (CH)
(72) Erfinder: Honert, Dieter, 69234, Dielheim (DE); Knauber, Hans, 69214, Eppelheim (DE)
(74) Vertreter: Isler, Jörg

(57) **Zusammenfassung**

Die Erfindung betrifft eine Zusammensetzung umfassend mindestens einen Verflüssiger für eine hydraulisch abbindende Zusammensetzung und mindestens einen Aminoalkohol, ausgewählt aus der Gruppe bestehend aus 2-Amino-2-methyl-1-propanol und N-Aminopropyl-monomethylethanolamin, sowie die Verwendung dieser Zusammensetzung zur Verminderung von Korrosion an Stahl, insbesondere an Stahlschalungen in Fertigteilelementen oder an Armierungsstahl von Betonkonstruktionen.

## Beschreibung

### Technisches Gebiet

Die Erfindung betrifft das Gebiet der Korrosionsinhibitoren an Stahl, insbesondere an Stahlschalungen in Fertigteilelementen oder an Armierungsstahl von Betonkonstruktionen. Die Erfindung betrifft insbesondere eine Zusammensetzung umfassend mindestens einen Verflüssiger für eine hydraulisch abbindende Zusammensetzung und mindestens einen Aminoalkohol, ausgewählt aus der Gruppe bestehend aus 2-Amino-2-methyl-1-propanol und N-Aminopropyl-monomethylethanolamin.

### Stand der Technik

Stahlschalungen sind Formen zum Giessen von Beton, in welche Frischbeton zur Herstellung von Betonbauteilen, auch Fertigteilelemente genannt, eingebracht werden. Nach dem Erhärten des Betons werden die Stahlschalungen im Regelfall wieder entfernt. Die Korrosion von Stahlschalungen ist ein grosses Problem und kann zur Verminderung der Betonqualität, insbesondere der Betonoberflächenqualität, führen und z.B. auf Sichtbeton unerwünschte Rostspuren hinterlassen. Zur Rostunterdrückung wird in der Regel vor der Verwendung der Stahlschalungen ein Betontrennmittel, auch Schalöle genannt, aufgetragen. Diese Schalöle haben den Nachteil, dass sie nur begrenzt die Korrosion und somit die Rostbildung unterdrücken können, und dass sie zudem auf jede Stahlschalung einzeln aufgetragen werden müssen bei jeder Verwendung, was sowohl unökonomisch ist als auch die Umwelt belastet.

Stahl als Verstärkungsmittel in Bauwerken ist weit verbreitet. Von besonderer Wichtigkeit ist Betonstahl. Der Stahl wird in ein hydraulisch abbindendes Material eingebracht und verstärkt dieses. Der Stahl kommt insbesondere strangförmig, insbesondere als Stangen oder Gitter, zum Einsatz, und wird vom Fachmann vielfach auch als Bewehrung oder Armierungseisen bezeichnet. Die Korrosion von Stahl, welcher in hydraulisch abgebundenen Materialien vorhanden ist, ist von grosser wirtschaftlicher Bedeutung. Durch die Korrosion der Stahleinlage wird deren Festigkeit und somit die Festigkeit des Betons vermindert. Darüber hinaus weisen die Korrosionsprodukte wie beispielsweise Eisenoxide oder Eisenoxidhydrate ein grösseres Volumen auf, als der unkorrodierte Stahl selbst. Als Folge daraus entstehen Spannungen im Beton, die zu Rissen oder zum Abplatzen von ganzen Stücken führen können.

Es ist bekannt, dem Frischbeton Korrosionsinhibitoren, wie beispielsweise Nitrite, Amine, Alkanolamine, deren Mischungen mit anorganischen oder organischen Säuren oder Phosphorsäureestern, zuzusetzen oder Oberflächen von ausgehärtetem Stahlbeton mit einem penetrierenden Korrosionsinhibitor zu behandeln. Um ihre Wirkung entfalten zu können, müssen die Korrosionsinhibitoren jedoch in grossen Mengen eingesetzt werden, was sowohl ökonomisch wie auch ökologisch ein Nachteil sein kann.

Der Einsatz von so genannten Beton-Verflüssigern ist seit langem bekannt. Beispielsweise ist aus EP 1 138 697 B1 oder EP 1 061 089 B1 bekannt, dass (Meth)acrylat-Polymere mit Ester- und gegebenenfalls Amid-Seitenketten als Beton-Verflüssiger geeignet sind. Hierbei wird dieser Beton-Verflüssiger dem Zement als Zusatzmittel zugegeben oder dem Zement vor dem Mahlen zugesetzt, und führt zu einer starken Verflüssigung, beziehungsweise Reduktion des Wasserbedarfs, des daraus hergestellten Betons oder Mörtels.

### Darstellung der Erfindung

Aufgabe der vorliegenden Erfindung ist es daher, Zusammensetzungen für die Verminderung der Korrosion, insbesondere an Stahlschalungen oder an Bewehrungsstahl, zur Verfügung zu stellen, welche die Nachteile des Standes der Technik überwinden. Überraschenderweise wurde nun gefunden, dass eine Zusammensetzung umfassend mindestens einen Verflüssiger für eine hydraulisch abbindende Zusammensetzung und mindestens einen Aminoalkohol, ausgewählt aus der Gruppe bestehend aus 2-Amino-2-methyl-1-propanol und N-Aminopropyl-monomethylethanolamin hervorragend geeignet ist, um Korrosion an Stahlschalungen oder an Armierungsstahl zu verhindern oder zu vermindern. Zudem weisen derartige Zusammensetzungen eine hervorragende Verarbeitbarkeit und eine hohe Stabilität auf.

### Wege zur Ausführung der Erfindung

Die vorliegende Erfindung betrifft eine Zusammensetzung umfassend oder bestehend aus mindestens einem Verflüssiger für eine hydraulisch abbindende Zusammensetzung und mindestens einem Aminoalkohol, ausgewählt aus der Gruppe bestehend aus 2-Amino-2-methyl-1-propanol und N-Aminopropyl-monomethylethanolamin. Besonders bevorzugt ist eine Zusammensetzung umfassend oder bestehend aus mindestens einem Verflüssiger und 2-Amino-2-methyl-1-propanol. Das N-Aminopropyl-monomethylethanolamin wird auch als 2-[(3-aminopropyl)methylamino]ethanol (CAS Nr. 41999-70-6) bezeichnet.

Der mindestens eine Aminoalkohol der erfindungsgemässen Zusammensetzung ist 2-Amino-2-methyl-1-propanol oder N-Aminopropyl-monomethylethanolamin oder ein Gemisch von 2-Amino-2-methyl-1-propanol und N-Aminopropyl-monomethylethanolamin.

Als Verflüssiger kommen diejenigen in Frage, welche geeignet sind, eine hydraulisch abbindende Zusammensetzung zu verflüssigen oder deren Wasserbedarf zu reduzieren. Unter ,Verflüssiger' versteht man im Sinne der Erfindung auch einen Superverflüssiger, der vielfach auch als Fliessmittel bezeichnet wird.

In einer bevorzugten Ausführungsform enthält oder besteht der Verflüssiger aus Polycarboxylat, vorzugsweise aus Polycarboxylatether (PCE). Vorzugsweise enthält oder besteht das Polycarboxylat aus mindestens einem Polymer **A** der Formel (I).

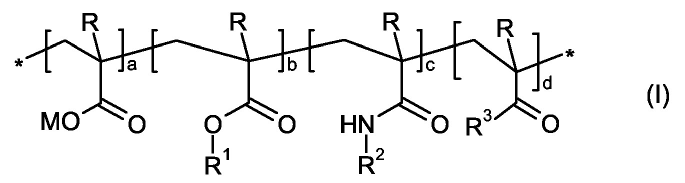

Hierbei stellen M unabhängig voneinander H⁺, Alkalimetallion, Erdalkalimetallion, zwei- oder dreiwertiges Metallion, Ammoniumion, oder organische Ammoniumgruppe dar. Der Term "unabhängig voneinander" bedeutet hier und im Folgenden jeweils, dass ein Substituent unterschiedliche zur Verfügung stehenden Bedeutungen in demselben Molekül aufweisen kann. So kann beispielsweise im Polymer **A** der Formel (I) gleichzeitig Carbonsäuregruppen und Natriumcarboxylatgruppen aufweisen, das heisst, dass für R₁ in diesem Falle H⁺ und Na⁺ unabhängig voneinander bedeuten.

Dem Fachmann ist klar, dass es sich einerseits um ein Carboxylat handelt, an welches das Ion M gebunden ist, und dass andererseits bei mehrwertigen Ionen M die Ladung durch Gegenionen ausgeglichen sein muss.

Weiterhin stellen die Substituenten R unabhängig voneinander Wasserstoff oder Methyl dar. Das heisst es handelt sich beim Polymeren **A** um ein substituiertes Poly(acrylat), Poly(methacrylat) oder um ein Poly((meth)-acrylat).

Des Weiteren stellen die Substituenten R¹ und R² unabhängig voneinander C₁- bis C₂₀-Alkyl, Cycloalkyl, Alkylaryl oder -[AO]ₙ-R⁴ dar. Hierbei stellt A eine C₂- bis C₄-Alkylengruppe dar und R⁴ eine C₁- bis C₂₀ -Alkyl-, Cyclohexyl- oder Alkylarylgruppe dar, während n einen Wert von 2 bis 250, insbesondere von 8 bis 200, besonders bevorzugt von 11 bis 150, darstellt.

Des Weiteren stellt der Substituenten R³ unabhängig voneinander -NH₂, -NR⁵R⁶, -OR⁷NR⁸R⁹ dar. Hierbei stehen R⁵ und R⁶ unabhängig voneinander für H oder für eine C₁- bis C₂₀- Alkyl-, Cycloalkyl- oder Alkylaryl- oder Arylgruppe oder eine Hydroxyalkylgruppe oder eine Acetoxyethyl- (CH₃-CO-O-CH₂-CH₂-) oder eine Hydroxy-isopropyl- (HO-CH(CH₃)-CH₂-) oder eine Acetoxyisopropylgruppe (CH₃-CO-O-CH(CH₃)-CH₂-) oder R⁵ und R⁶ bilden zusammen einen Ring, von dem der Stickstoff des -NR⁵R⁶ ein Teil ist, um einen Morpholin- oder Imidazolinring aufzubauen. Weiterhin stellen hierbei die Substituenten R⁸ und R⁹ unabhängig voneinander eine C₁- bis C₂₀- Alkyl-, Cycloalkyl-, Alkylaryl-, Aryl- oder eine Hydroxyalkylgruppe und R⁷ eine lineare oder verzweigte C₂-C₄- Alkylengruppe, insbesondere Isomere der C₂-C₄-Alkylene, vorzugsweise ein Ethylen, Propylen, Isopropylen oder -C(CH₃)₂-CH₂-, dar.

Schliesslich stellen die Indizes a, b, c und d Molverhältnisse dieser Strukturelemente im Polymer **A** der Formel (I) dar. Diese Strukturelemente stehen in einem Verhältnis von
a/b/c/d = (0.05 - 0.9) / (0.05 - 0.9) / (0- 0.8) / (0 - 0.5),
insbesondere a/b/c/d = (0.1 - 0.9) / (0.1 - 0.9) / (0 - 0.5) / (0 - 0.1),
bevorzugt a/b/c/d = (0.1 - 0.9) / (0.1 - 0.9) / (0 - 0.3) / (0 - 0.06),
zueinander, während die Summe a + b + c + d = 1 ist. Die Summe c + d ist bevorzugt grösser als 0.

Typischerweise beträgt der Anteil des Polymeren **A** der Formel (I) 10 bis 100 Gewichts-%, insbesondere 25 bis 50 Gew.-%, bezogen auf das Gewicht des Verflüssigers.

Die Herstellung des Polymeren **A** kann durch radikalische Polymerisation der jeweiligen Monomere 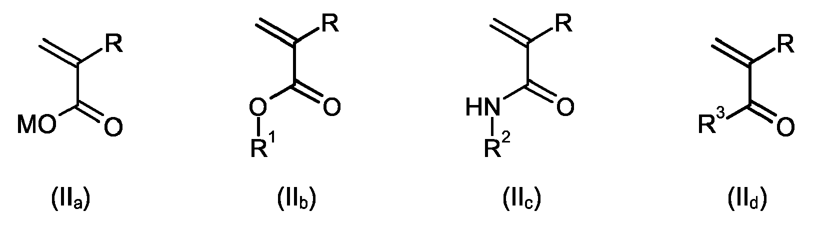 oder durch eine sogenannte polymer-analoge Umsetzung eine Polycarbonsäure der Formel (III) erfolgen

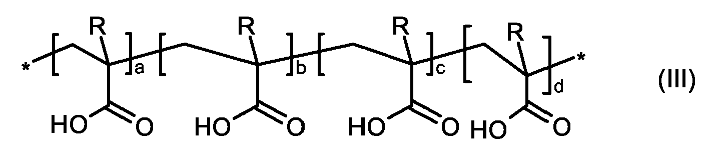

In der polymer-analoge Umsetzung wird die Polycarbonsäure mit den korrespondierenden Alkoholen, Aminen verestert oder amidiert. Details zur polymer-analogen Umsetzung sind offenbart beispielsweise in EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in dessen den Beispielen. In einer Variante davon, wie sie in EP 1 348 729 A1 auf Seite 3 bis Seite 5 sowie in dessen Beispielen beschrieben sind, kann das Polymer **A** in festem Aggregatszustand hergestellt werden.

Es hat sich erwiesen, dass eine besonders bevorzugte Ausführungsform des Polymeren diejenigen sind, in welchen c+d > 0, insbesondere d > 0, sind. Als Rest R³ hat sich insbesondere -NH-CH₂-CH₂-OH als besonderes vorteilhaft erwiesen. Derartige Polymere **A** weisen ein chemisch gebundenes Ethanolamin auf, welches abgespalten werden kann. Das Ethanolamin stellt einen äusserst effizienten Korrosionsinhibitor dar. Durch die chemische Anbindung des Korrosionsinhibitors ist der Geruch stark reduziert im Vergleich dazu, wo dieser lediglich beigemischt ist. Weiterhin konnte festgestellt werden, dass derartige Polymere **A** auch bedeutend stärkere Verflüssigereigenschaften aufweisen.

In einer weiteren bevorzugten Ausführungsform enthält oder besteht der Verflüssiger der vorliegenden erfindungsgemässen Zusammensetzung aus mindestens einem Polysaccharid, vinylischen Copolymeren oder mindestens einem Sulfonat, vorzugsweise basierend auf einem Lignin-, Naphthalin-, oder Melamin-Sulfonat. Das vinylische Copolymer basiert vorzugsweise auf einem Polyvinylalkohol oder einem Polyvinylether. Vorzugsweise enthält, besteht aus, oder basiert der Verflüssiger auf Na-, Ca- oder Mg-Ligninsulfonat, auf Na-, Ca- oder Mg-Naphthalinsulfonat, auf Na- oder Ca- Melaminsulfonat, auf sulfonierten Melamin- oder Naphthalin-Formaldehydkondensaten. Besonders bevorzugt ist das Na-Ligninsulfonat oder das Na-Naphthalinsulfonat.

In einer weiteren Ausführungsform kann die erfindungsgemässe Zusammensetzung weitere Zusatzstoffe, vorzugsweise ein Lösungsmittel, insbesondere Wasser, enthalten. Vorzugsweise ist die erfindungsgemässe Zusammensetzung eine Dispersion, insbesondere eine wässrige Dispersion, oder eine Lösung, insbesondere eine wässrige Lösung.

Als eingesetzte Lösungsmittel geeignet sind Wasser und organische Lösungsmittel. Die Auswahl erfolgt nach technischen, bevorzugt aber auch nach ökologischen Gesichtspunkten, wie beispielsweise die Toxizität, Wassergefährdungsklassen oder biologische Abbaubarkeit.

Als organische Lösungsmittel sind besonders geeignet Alkohole, vorzugsweise Methanol, Ethanol, Propanol, Isopropanol, Butanol, höhere Alkohole, wie Ethylenglykol, Glycerin, Polyetherpolyole wie Polyethylenglykole und Etheralkohole, wie Butylglykol, Methoxypropanol, und Alkylpolyethylenglykole, aber auch Aldehyde, Ester, Ether, Amide oder Ketone, insbesondere Aceton, Methylethylketon, Kohlenwasserstoffe, insbesondere Methylester, Ethylester, Isopropylester, Heptan, Cyclohexan, Xylol, Toluol, White Spirit sowie deren Mischungen. Als bevorzugt gelten Ethylacetat, Ethanol, Isopropanol oder Heptan, sowie Mischungen davon.

Insbesondere bevorzugt ist Wasser als Lösungsmittel. Weiterhin bevorzugt sind Gemische von Wasser mit Alkoholen mit einem Wasseranteil von mehr als 50 Gew.-%, bevorzugt mehr als 65 Gew.-%, insbesondere mehr als 80 Gew.-%.

Besonders bevorzugt ist eine Zusammensetzung bestehend aus Na-Ligninsulfonat oder Na-Naphthalinsulfonat, 2-Amino-2-methyl-1-propanol und Wasser.

Beispiele für weitere Zusatzstoffe sind Additive, wie sie in der Betontechnologie geläufig sind, insbesondere oberflächenaktive Stoffe, Stabilisatoren gegen Hitze und Licht, Trennmittel, Chromatreduzierer, Farbstoffe, Entschäumer, Beschleuniger, Verzögerer, weitere Korrosionsinhibitoren, lufteinführende oder entlüftende Substanzen, Porenbildner, Pumphilfsmittel, Viskositätsregler, Hydrophobiermittel oder Thixothropiermittel, Schwindreduzierer.

Der Anteil des Aminoalkohols beträgt 0.1 bis 20 Gew.-%, vorzugsweise 0.5 bis 10 Gew.-%, besonders bevorzugt 1 bis 5 Gew.-%, bezogen auf das Gesamtgewicht der Zusammensetzung.

Der Anteil des mindestens einen Verflüssigers beträgt 10 bis 99.9 Gew.-%, bevorzugt 50 bis 95 Gew.-%, noch mehr bevorzugt 80 bis 90 Gew.-%, bezogen auf das Gesamtgewicht der Zusammensetzung.

Der Anteil an Wasser oder Lösungsmittel beträgt 0 bis 70 Gew.-%, bevorzugt 5 bis 50 Gew.-%, noch mehr bevorzugt 10 bis 40 Gew.-%, bezogen auf das Gesamtgewicht der Zusammensetzung.

In einem weiteren Aspekt betrifft die vorliegende Erfindung eine hydraulisch abbindende Zusammensetzung, welche die erfindungsgemässe Zusammensetzung sowie weiterhin mindestens ein hydraulisch abbindendes Bindemittel enthält oder daraus besteht. Das hydraulisch abbindende Bindemittel ist vorzugsweise ein mineralisches Bindemittel wie beispielsweise Zement, Gips, Flugasche, Silica fume, Schlacke, Hüttensande, Kalksteinfiller, oder gebrannter Kalk. Bevorzugte hydraulische Bindemittel umfassen mindestens einen Zement, insbesondere mindestens einen Zement gemäss Euronorm EN 197 oder Calciumsulfat, in Form von Anhydrit, Halbhydrat- oder Dihydratgips; oder Calciumhydroxid. Bevorzugt sind Portlandzemente, Sulfoaluminatzemente und Tonerdeschmelzzemente, insbesondere Portlandzement. Mischungen von Zementen können zu besonders guten Eigenschaften führen. Für eine schnelle Aushärtung kommen vor allem zementöse Schnellbindemittel zum Einsatz, die vorzugsweise mindestens einen Tonerdeschmelzzement oder eine andere Aluminatquelle, wie beispielsweise aluminatspendende Klinker, und gegebenenfalls Calciumsulfat, in Form von Anhydrit, Halbhydrat- oder Dihydratgips; und/oder Calciumhydroxid enthalten. Als Bestandteil des hydraulischen Bindemittels wird Zement, insbesondere Portlandzement, bevorzugt. Besonders bevorzugt wird ein chromatarmer Zement.

Die erfindungsgemässe Zusammensetzung wird vorzugsweise dem hydraulisch abbindenden Bindemittel so zudosiert, dass der Anteil der erfindungsgemässen Zusammensetzung 0.1 bis 5 Gew.-%, vorzugsweise 0.2 bis 2 Gew.-%, besonders bevorzugt 0.4 bis 1.5 Gew.-%, bezogen auf das Gewicht des hydraulisch abbindenden Bindemittels beträgt.

Die Herstellung der erfindungsgemässen Zusammensetzung erfolgt durch Vermischen des Aminoalkohols 2-Amino-2-methyl-1-propanol oder N-Aminopropyl-monomethylethanolamin mit mindestens einem Verflüssiger, wobei die Reihenfolge, ob zuerst der Aminoalkohol oder zuerst der Verflüssiger vorliegt, keine Rolle spielt. Die Herstellung einer wässrigen Zusammensetzung oder Lösung erfolgt durch Zusetzen von Wasser oder einem organischen Lösungsmittel bei der Herstellung des Verflüssigers, insbesondere bei der Herstellung des Polymers **A** der Formel (I), oder durch nachträgliches Vermengen des Verflüssigers, des Aminoalkohols, oder des Verflüssigers und des Aminoalkohols mit Wasser oder einem organischen Lösungsmittel. Vorzugsweise wird der Verflüssiger mit Wasser oder einem organischen Lösungsmittel, vorzugsweise mit Wasser, vermengt und anschliessend der Aminoalkohol zugegeben. Die erfindungsgemässe Zusammensetzung kann als klare oder opake Lösung oder als Dispersion, das heisst als Emulsion oder Suspension, vorliegen.

Bei der Herstellung der hydraulisch abbindenden Zusammensetzung wird die erfindungsgemässe Zusammensetzung vorzugsweise gleichzeitig mit dem Anmachwasser der hydraulisch abbindenden Zusammensetzung, vorzugsweise der Betontrockenmischung, zugegeben, oder nach Zugabe des Anmachwassers zuletzt in die hydraulisch abbindende Zusammensetzung eingemischt.

In einem weiteren Aspekt betrifft die vorliegende Erfindung die Verwendung der erfindungsgemässen Zusammensetzung zur Verminderung oder Verhinderung von Korrosion an Stahl, insbesondere von Korrosion an Stahlschalungen von Fertigteilelementen oder an Armierungsstahl von Betonkonstruktionen. Insbesondere geeignet ist die erfindungsgemässe Zusammensetzung zur Verminderung oder Verhinderung von Korrosion an Stahlschalungen, welche zur Herstellung von Fertigteilelementen verwendet werden.

In einem weiteren Aspekt betrifft die vorliegende Erfindung die Verwendung von 2-Amino-2-methyl-1-propanol und/oder N-Aminopropyl-monomethylethanolamin zur Verminderung oder Verhinderung von Korrosion an Stahlschalungen von Fertigteilelementen oder an Armierungsstahl von Betonkonstruktionen.

In einem weiteren Aspekt betrifft die vorliegende Erfindung ein Verfahren zur Verminderung von Korrosion an Stahlschalungen von Fertigteilelementen oder an Stahlarmierungen von Stahlbetonkonstruktionen, wobei die erfindungsgemässe Zusammensetzung dem Frischbeton zugegeben wird und der Frischbeton mit dem Stahl in Kontakt gebracht wird.

Ein weiterer Gegenstand der vorliegenden Erfindung ist eine gegen Korrosion von Stahlschalungen oder gegen Korrosion von Stahlarmierung geschützte Betonkonstruktion, welche mindestens eine erfindungsgemässe Zusammensetzung umfasst. Die Betonkonstruktion ist vorteilhaft ein Bauwerk oder ein Bauteil des Hoch- oder Tiefbaus, insbesondere ein Gebäude oder Tunnel, eine Strasse oder eine Brücke, insbesondere ein Bauwerk, welches aus Fertigteilelementen hergestellt wird.

Ein weiterer Gegenstand der vorliegenden Erfindung ist deshalb auch ein Fertigteilelement umfassend die erfindungsgemässe Zusammensetzung. Das Fertigteilelement ist beispielsweise eine Röhre, eine Wand-, Decken- oder Bodenplatte, ein Tübing-Element, Stützen, Brückenträger, Brückensegment, Binder, eine Treppe oder ein Podest.

Die vorliegende erfindungsgemässe Zusammensetzung hat den Vorteil, dass sie gleichzeitig als Verflüssiger für eine hydraulisch abbindende Zusammensetzung und als Korrosionsinhibitor für Stahl wirkt. Dies bewirkt, dass der Korrosionsschutz, zusätzlich zur korrosionsinhibierenden Wirkung durch den Aminoalkohol, noch verbessert wird, weil durch die Verwendung des Verflüssigers die Menge des benötigten Anmachwassers bei der Herstellung von Beton reduziert wird und somit der Wasser/Zement-Wert (w/z-Wert) abnimmt. Je tiefer der Wasser/Zement-Wert, desto weniger korrosionsanfällig sind die mit dem Beton in Kontakt kommenden Stahlschalungen oder Stahleinlagen.

Somit ist gemäss dieser Ausführungsform kein nachträgliches Zumischen eines Verflüssigers oder Korrosionsinhibitors mehr nötig und spart deshalb einen Arbeitsgang beim Anwenden des Zementes. Ein derartiger Zement stellt daher ein "ready-to-use"- Produkt dar, welches in grossen Mengen hergestellt werden kann.

Ein weiterer Vorteil der erfindungsgemässen Zusammensetzung ist, dass der Korrosionsinhibitor direkt in die hydraulisch abbindende Zusammensetzung eingebracht werden kann und der Korrosionsinhibitor nicht auf die Stahlschalungen oder Stahleinlagen aufgebracht werden muss, bevor die Stahlschalungen oder Stahleinlagen verwendet werden. Das bewirkt einen verbesserten Korrosionsschutz sowie das Einsparen von Zeit.

### Beispiele

Die Erfindung wird nun anhand von Beispielen näher erläutert.

### 1.1 Verwendete Rohstoffe

**Tabelle 1: Eingesetzte Rohstoffe; die Prozentangaben sind Gew.-% bezogen auf das Gesamtgewicht des Rohstoffs**

| **Kommerzieller Name** | **Lieferant** | **Art** | **Abkürzung** |
|---|---|---|---|
| Liquiment® N | Liquiment Linz GmbH | Na-Naphthalinsulfonat (40%), Wasser (60%) | Liquiment |
| Borresperse NA 244 | Borregaard, Deutschland | Na-Ligninsulfonat (45%), Wasser (55%) | Borresperse |
| Borrement CA 124 | Borregaard, Deutschland | Ca-Ligninsulfonat (50%), Wasser (50%) | Borrement |
| AMP-90® | The Dow Chemical Company | 2-Amino-2-methyl-1-propanol (90%), Wasser (10%) | AMP-90 |
| XTA - 758 | Huntsman | N-Aminopropylmonomethylethanolamin oder 2-[(3-aminopropyl)-methylamino]ethanol (CAS Nr. 41999-70-6) | XTA |
| 2-(Dimethylamino)-ethanol | Fluka, Schweiz | 2-(Dimethylamino)-ethanol | DMA |
| Triethanolamin | Fluka, Schweiz | Triethanolamin | TEA |

### 1.2 Verwendetes Polymer A

**Tabelle 2 Verwendete Abkürzungen. *Mw = mittleres Molekulargewicht**

| Abkürzung | Bedeutung | Mw* |
|---|---|---|
| PEG1000 | Polyethylenglykol ohne terminale OH-Gruppen | 1000 g/mol |
| PEG3000 | Polyethylenglykol ohne terminale OH-Gruppen | 3000 g/mol |
| EO/PO(50/50)2000 | Block-Copolymer aus Ethylenoxid und Propylenoxid im Verhältnis 50:50 ohne terminale OH-Gruppen | 2000 g/mol |

Es wurde das in Tabelle 3 angegebene Polymer A-1 mittels polymer analoger Umsetzung aus Poly(meth)acrylsäure mit den korrespondierenden Alkoholen und Aminen nach bekannter Art und Weise hergestellt. Das Polymer *A-1* liegt durch NaOH teil neutralisiert vor. (M = H⁺, Na⁺).

Das Polymer **A** wird in diesen Beispielen als wässrige Lösung eingesetzt. Der Gehalt an Polymer ist 40 Gew.-%. Diese wässrige Lösung wird als *A-1L* bezeichnet. Die in den folgenden Tabellen angegebenen Konzentrationen für *A-1* beziehen sich jeweils auf den Gehalt an wässriger Lösung *A-1L.*

**Tabelle 3 Polymer A-1 entspricht der Formel (I) mit M= H⁺, Na⁺.**

| R= | H | |
|---|---|---|
| R¹ = | -PEG1000-OCH₃ : -PEG3000-OCH₃ | 57.2:42.8 Molverhältnis |
| R² = | EO/PO(50/50)2000-OCH₃ | |
| R³ = | | |
| a/b/c/d = | 0.640/0.358/0.002/0.000 | |
| Mw | 72'000 | |

### 2. Korrosionsverhalten von Verflüssiger und Aminoalkohol auf Stahlplatten

5 Gew.-%- Zement (CEM I 42,5 R) wurde mit 95 Gew.-%-Wasser gemischt und diese Mischung filtriert. Als Resultat erhielt man so genanntes "Blutwasser". Danach wurde eine Mischung aus Blutwasser und Aminoalkohol oder Verflüssiger oder aus Blutwasser, Aminoalkohol und Verflüssiger hergestellt und jeweils 3 Tropfen dieser Mischung auf eine Stahlplatte (20x20cm, ST 35) aufgetragen. Die Dosierung des zum Blutwasser zugegebenen Aminoalkohols oder Verflüssigers sind in Tabelle 4 angegeben. Die %-Angaben sind jeweils die Gew.-% der wässrigen Lösungen des Aminoalkohols bzw. des Verflüssigers, bezogen auf die Gesamtmischung des Blutwassers und der wässrigen Lösungen des Aminoalkohols bzw. des Verflüssigers.

**Tabelle 4: Korrosionsverhalten von Aminoalkohol oder Verflüssigern in Blutwasser auf Stahlplatten**

| Nr. | Substanz | Dosierung (%) | Korrosionsstärke |
|---|---|---|---|
| 1 | Nur Blutwasser | - | stark |
| 2 | *A-1L* | 0.35 | stark |
| 3 | *A-1L* | 1 | stark |
| 4 | *A-1L* | 2 | mittel |
| 5 | Borresperse | 0.35 | mittel |
| 6 | Borrement | 0.35 | stark |
| 7 | Liquiment | 0.35 | stark |
| 8 | AMP-90 | 0.3 | keine |
| 9 | 2-(Dimethylamino)-ethanol | 0.3 | gering |
| 10 | Triethanolamin | 0.3 | mittel |
| 11 | XTA | 0.3 | gering-mittel |
| 12 | *A-1L* / Borrement | 0.25 / 0.1 | stark |
| 13 | *A-1L* / AMP-90 | 2/0.1 | gering |
| 14 | *A-1L* / AMP-90 | 1 / 0.3 | gering |
| 15 | *A-1L* / AMP-90 | 1 / 0.1 | gering |
| 16 | *A-1L* / AMP-90 | 0.35 / 0.1 | gering |
| 17 | *A-1L* / AMP-90 | 0.35 / 0.01 | mittel |
| 18 | *A-1L* / Borrement / AMP-90 | 0.25 / 0.1 / 0.1 | gering |
| 19 | *A-1L* / Borrement / AMP-90 | 0.33 / 0.01 / 0.01 | stark |
| 20 | *A-1L* / XTA | 0.35/0.1 | gering |

### 3. Korrosionsverhalten von Mörtelmischungen auf Stahlplatten

Eine Normmörtelmischung (1350 g Normsand (nach der Norm EN 480), 450 g Zement (CEM I 42,5 R), 225 g Wasser, w/z-Wert 0.5%), wurde mit einem Gemisch aus Verflüssiger und Aminoalkohol versetzt und in einer 1cm dicken Schicht auf ein, auf einer Stahlplatte liegenden, Weißbandfilterpapier aufgetragen. Nach 24 Stunden wurde die Korrosionsstärke auf den Stahlplatten optisch beurteilt (Tabelle 5). Die %-Angaben der Dosierung sind jeweils die Gew.-% des Aminoalkohols bzw. des Verflüssigers bezogen auf das Gesamtgewicht des Zements.

**Tabelle 5: Korrosionsverhalten von Mörtelmischungen mit Aminoalkohol oder Verflüssiger auf Stahlplatten**

| Nr. | Substanz | Dosierung (%) | Korrosionsstärke |
|---|---|---|---|
| 21 | Nur Mörtelmischung | - | stark |
| 22 | *A-1L* | 1 | stark |
| 23 | *A-1L* / AMP-90 / Borresperse | 0.96 / 0.02 / 0.02 | gering |
| 24 | *A-1L* / AMP-90 / Borresperse | 0.94 / 0.03 / 0.03 | gering |

### 4. Ausbreitmass, Druckfestigkeit und Luftporengehalt von Betonmischungen

Es wurde eine Betonmischung nach EN 934 hergestellt aus 360 kg/m³ CEM I 52.5 R, der Druckfestigkeitsklasse C35/45, der Ausbreitmassklasse F5, mit einem Grösstkorn von 16 mm (GK16), und mit einem Wasser/Zement-Wert (w/z-Wert) von 0.45.

Die Betonmischung wurde mit Verflüssiger bzw. mit einem Verflüssiger/Aminoalkohol-Gemisch versetzt und das Ausbreitmass nach EN 12350, der Luftporengehalt nach EN 12350, sowie die Druckfestigkeit der erhärteten Prismen gemäss EN 12390 bestimmt.

Folgende Verflüssiger bzw. Aminoalkohole wurden getestet (Tabelle 6):

**Tabelle 6: Verflüssiger bzw. Aminoalkohole und Gemische davon. Die Dosierung ist angegeben in Gew.-% bezogen auf das Gesamtgewicht des Verflüssiger/Aminoalkohol-Gemisches.**

| Nr. | Substanz | Dosierung (%) |
|---|---|---|
| **V1** | *A-1L* / AMP-90 / Borresperse | 90 / 5 / 5 |
| **V2** | *A-1L* / AMP-90 / Borresperse | 80 / 10 / 10 |
| **V3** | *A-1L* / AMP-90 / Borresperse | 94 / 3 / 3 |
| **V4** | *A-1L* / AMP-90 | 90 / 10 |
| **Ref 1** | *A-1L* | 100 |

**Tabelle 7: Vergleich der Verarbeitbarkeit bzw. der Konsistenz von Betonmischungen mit verschiedenen Verflüssiger/Aminoalkohol Gemischen.**

| Bezeichnung | **V1** | **V2** | **V3** | **V4** | **Ref 1** |
|---|---|---|---|---|---|
| Dosierung Gew.-% bezogen auf Zement | 0.5 | 0.56 | 0.53 | 0.52 | 0.48 |
| Ausbreitmass [cm] nach 10 min | 62 | 56 | 57 | 59 | 59 |
| Ausbreitmass [cm] nach 30 min | 43 | 39 | 41 | 36 | 41 |
| Ausbreitmass [cm] nach 45 min | 35 | 33 | 34 | 33 | 34 |
| Druckfestigkeit [N/mm²] nach 16h | 39 | 32 | 34 | 39 | 38 |
| Druckfestigkeit [N/mm²] nach 24h | 49 | 43 | 46 | 50 | 41 |
| Luftporengehalt [%] | 2.4 | 2.6 | 1.8 | 2 | 1.5 |

Die Resultate aus Tabelle 7 zeigen, dass die Verarbeitbarkeit und Konsistenz von Betonmischungen mit Verflüssiger und Aminoalkohol im Vergleich zu einer Betonmischung nur mit Verflüssiger gleich gut bleibt.

Selbstverständlich ist die Erfindung nicht auf die gezeigten und beschriebenen Ausführungsbeispiele beschränkt. Es versteht sich, dass die vorstehend genannten Merkmale der Erfindung nicht nur in der jeweils angegebenen Kombination, sondern auch in anderen Modifikationen, Kombinationen und Abänderungen oder in Alleinstellung verwendbar sind, ohne den Rahmen der Erfindung zu verlassen.

## Patentansprüche

1. Zusammensetzung umfassend mindestens einen Verflüssiger für eine hydraulisch abbindende Zusammensetzung
und
mindestens einen Aminoalkohol, ausgewählt aus der Gruppe bestehend aus 2-Amino-2-methyl-1-propanol und N-Aminopropyl-monomethylethanolamin.

2. Zusammensetzung nach Anspruch 1, **dadurch gekennzeichnet, dass** der Verflüssiger mindestens ein Polycarboxylat, vorzugsweise mindestens ein Polycarboxylatether, umfasst oder daraus besteht

3. Zusammensetzung nach Anspruch 2, **dadurch gekennzeichnet, dass** das Polycarboxylat mindestens ein Polymer A der Formel (I) umfasst oder daraus besteht 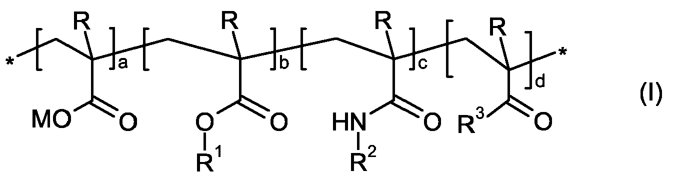 wobei
M = unabhängig voneinander H⁺, Alkalimetallion, Erdalkalimetallion, zwei- oder dreiwertiges Metallion, Ammoniumion oder organische Ammoniumgruppe darstellt,
R = jedes R unabhängig von den anderen Wasserstoff oder Methyl ist,
R¹ und R² = unabhängig voneinander C₁- bis C₂₀-Alkyl, Cycloalkyl, Alkylaryl oder -[AO]ₙ-R⁴ darstellen,
wobei A = C₂- bis C₄-Alkylen, R⁴ = C₁- bis C₂₀ -Alkyl, Cyclohexyl oder Alkylaryl darstellt, und n = 2 - 250,
R³ = -NH₂, -NR⁵R⁶, -OR⁷NR⁸R⁹,
wobei R⁵ und R⁶ unabhängig voneinander
H oder eine C₁- bis C₂₀- Alkyl-, Cycloalkyl- oder Alkylaryl- oder Arylgruppe ist;
oder
eine Hydroxyalkylgruppe ist,
oder eine
Acetoxyethyl- (CH₃-CO-O-CH₂-CH₂-) oder eine Hydroxy-isopropyl- (HO-CH(CH₃)-CH₂-) oder eine Acetoxyisopropylgruppe (CH₃-CO-O-CH(CH₃)-CH₂-) ist,
oder R⁵ und R⁶ zusammen einen Ring bilden,
von dem der Stickstoff des -NR⁵R⁶ ein Teil ist, um einen Morpholin- oder Imidazolinring aufbauen,
wobei R⁷
eine C₂-C₄- Alkylengruppe ist,
und R⁸ und R⁹
unabhängig voneinander eine C₁- bis C₂₀- Alkyl-, Cycloalkyl-, Alkylaryl-, Aryl- oder eine Hydroxyalkylgruppe ist,
und wobei a, b, c und d Molverhältnisse darstellen und
a/b/c/d = (0.05 - 0.9) / (0.05 - 0.95) / (0 - 0.8) / (0 - 0.5),
und a + b + c + d = 1 ist.

4. Zusammensetzung gemäss Anspruch 3, **dadurch gekennzeichnet, dass** n = 8 - 200, besonders bevorzugt n = 11 - 150 ist.

5. Zusammensetzung gemäss Anspruch 3 oder 4, **dadurch gekennzeichnet, dass**
a/b/c/d = (0.1 - 0.9) / (0.1 - 0.9) / (0 - 0.5) / (0 - 0.1), bevorzugt
a/b/c/d = (0.1 - 0.9) / (0.1 - 0.9) / (0 - 0.3) / (0 - 0.06) ist.

6. Zusammensetzung gemäss Anspruch 5, **dadurch gekennzeichnet, dass** c+d > 0 ist.

7. Zusammensetzung gemäss Anspruch 1, **dadurch gekennzeichnet, dass** der Verflüssiger mindestens ein Polysaccharid, vinylisches Copolymer oder Sulfonat, insbesondere ein Lignin-, Naphthalin-, oder Melamin-Sulfonat, umfasst oder daraus besteht.

8. Zusammensetzung gemäss einem der vorhergehenden Ansprüche, **dadurch gekennzeichnet, dass** die Zusammensetzung eine Dispersion, insbesondere eine wässrige Dispersion, ist.

9. Zusammensetzung gemäss einem der Ansprüche 1 bis 7, **dadurch gekennzeichnet, dass** die Zusammensetzung eine Lösung, insbesondere eine wässrige Lösung, ist.

10. Zusammensetzung gemäss einem der vorhergehenden Ansprüche, **dadurch gekennzeichnet, dass** die Zusammensetzung zusätzlich weitere Zusatzstoffe, vorzugsweise ein Lösungsmittel oder Wasser enthält.

11. Zusammensetzung gemäss einem der vorhergehenden Ansprüche, **dadurch gekennzeichnet, dass** der Anteil des Aminoalkohols 0.1 bis 20 Gew.-%, vorzugsweise 0.5 bis 10 Gew.-%, besonders bevorzugt 1 bis 5 Gew.-%, bezogen auf das Gesamtgewicht der Zusammensetzung, beträgt.

12. Zusammensetzung gemäss einem der vorhergehenden Ansprüche, **dadurch gekennzeichnet, dass** der Anteil des mindestens einen Verflüssigers 10 bis 99.9 Gew.-%, bevorzugt 50 bis 95 Gew.-%, noch mehr bevorzugt 80 bis 90 Gew.-%, bezogen auf das Gesamtgewicht der Zusammensetzung, beträgt.

13. Hydraulisch abbindende Zusammensetzung umfassend eine Zusammensetzung gemäss einem der Ansprüche 1 bis 12 sowie mindestens ein hydraulisch abbindendes Bindemittel.

14. Verwendung einer Zusammensetzung gemäss einem der Ansprüche 1 bis 12 zur Verminderung von Korrosion an Stahl.

15. Verwendung nach Anspruch 14, **dadurch gekennzeichnet, dass** die Korrosion an Stahlschalungen von Fertigteilelementen vermindert wird.

16. Verwendung nach Anspruch 14, **dadurch gekennzeichnet, dass** die Korrosion an Armierungsstahl von Betonkonstruktionen vermindert wird.

17. Verwendung von 2-Amino-2-methyl-1 -propanol und/oder N-Aminopropyl-monomethylethanolamin zur Verminderung von Korrosion an Stahlschalungen von Fertigteilelementen.

18. Verwendung von 2-Amino-2-methyl-1-propanol und/oder N-Aminopropyl-monomethylethanolamin zur Verminderung von Korrosion an Armierungsstahl von Betonkonstruktionen.

19. Verfahren zur Herstellung einer Zusammensetzung gemäss einem der Ansprüche 1 bis 12, umfassend den Schritt
a) Vermischen des Aminoalkohols 2-Amino-2-methyl-1-propanol oder N-Aminopropyl-monomethylethanolamin und mindestens einen Verflüssiger.

20. Verfahren zur Verminderung von Korrosion an Stahlschalungen von Fertigteilelementen oder an Stahlarmierungen von Stahlbetonkonstruktionen, **dadurch gekennzeichnet, dass** eine Zusammensetzung gemäss einem der Ansprüche 1 bis 12 dem Frischbeton zugegeben wird und der Frischbeton mit dem Stahl in Kontakt gebracht wird.

21. Betonkonstruktion umfassend eine Zusammensetzung gemäss einem der Ansprüche 1 bis 12.

22. Betonkonstruktion nach Anspruch 21, **dadurch gekennzeichnet, dass** die Betonkonstruktion ein Bauwerk oder Bauteil des Hoch- oder Tiefbaus ist, insbesondere ein Gebäude, eine Strasse, eine Brücke oder ein Tunnel ist.

23. Fertigteilelement umfassend eine Zusammensetzung gemäss einem der Ansprüche 1 bis 12.
